# EUROPEAN PATENT SPECIFICATION

(11) **EP 3 236 300 B1**
(45) Date of publication and mention of the grant of the patent: **04.03.2020**
(21) Application number: 16180268.1
(22) Date of filing: 20.07.2016
(51) Int. Cl.: G02B 6/255

(54) **WINDPROOF COVER UNIT FOR OPTICAL FIBER FUSION SPLICER**
WINDDICHTE ABDECKEINHEIT FÜR GLASFASERFUSIONSSPLEISSER
COUVERCLE RÉSISTANT AU VENT POUR ÉPISSEUR PAR FUSION À FIBRE OPTIQUE

(30) Priority: 22.04.2016 CN 201610253661
(43) Date of publication of application: 25.10.2017
(73) Proprietor: INNO INSTRUMENT (CHINA), INC, Torch Hi-tech Industrial Development Zone Weihai Shandong (CN)
(72) Inventor: Zhao, Yangri, Weihai, Shandong 264200 (CN)
(74) Representative: Sun, Yiming

(56) References cited:
- JP-A- 2012 222 621
- US-A1- 2009 232 457

## Description

### TECHNICAL FIELD

The present invention relates to the optical fiber fusion splicer and its parts, and in particular, to the design of the windproof cover unit for optical fiber fusion splicer.

### BACKGROUND

In the optical fiber fusion splicer, the white-light lamps are mainly for the operating illumination of optical fiber fusion and they are usually designed at the front or rear side of the optical fiber fusion splicer. Since it should be guaranteed that the light of the white-light lamps illuminates on the ceramic V-shaped groove, the white-light lamps are placed at a higher location, which limits the overall dimensions of the optical fiber fusion splicer to a certain extent, especially for the design of the windproof cover. Besides, the optical fiber fusion splicer in the prior art generally connects with the windproof cover by the combination of an axle and an axle sleeve. Such method has no limit in the axial direction, thus the windproof cover will move and wobble axially, disrupting the soundness and stability of the combination of the windproof cover and the optical fiber fusion splicer.

In addition, the red-light lamps on the top cover of the optical fiber fusion splicer can operate properly only when the flexible printed circuit (FPC) cable is connected with the main body of the optical fiber fusion splicer. In the prior art, the FPC cable is exposed on the outside. Such exposure of cable may affect the appearance and damage the FPC; or the FPC cable is configured with an independent cover, but it will affect the overall appearance of the optical fiber fusion splicer and result in higher costs.

US Patent application publication number US 2009/232457 A1 discloses an optical fiber fusion splicer of the prior art.

### SUMMARY

The objective of the present invention is to provide a windproof cover unit for optical fiber fusion splicer to overcome the above defects in the prior art, in other words, the unit assists the proper configuration of the white-light lamps and prevents the movement of the windproof cover by its rotational axle, meanwhile, it also assists the proper configuration of the FPC cable to prevent damage and maintain the overall appearance.

The present invention provides a windproof cover unit for optical fiber fusion splicer according to claim 1, comprising a windproof cover 1, a mounting base unit, a FPC unit and a rotational axle 18 of the windproof cover, wherein the windproof cover 1 comprising a protruding cover surface and an internal accommodation space, where a white-light lamp unit for the operating illumination of the fusion splicer is configured.
The white-light lamp unit is configured on the FPC unit 9, which is configured between the mounting base unit and the internal accommodation space of the windproof cover and is fixed firmly inside the windproof cover by the mounting base unit.
The mounting base unit comprises a mounting base 2, two lampshades 4, a pressing device base 3, two pairs of retaining screws 5 for the lampshades, wherein the mounting base 2 comprising a mounting plate 10 in the middle and two support frames 11 on both sides of the mounting base; the mounting plate 10 is configured with different threaded holes matching with the mounting holes on the inner surface of the windproof cover 1 and those on the lampshades 4 respectively; the mounting plate is configured with lampshade support frames 11 on both sides, and the lampshades 4 are configured with mounting holes, through which the retaining screws 5 for the lampshades connect and fix the lampshade support frames 11 with the lampshades 4; the pressing device base 3 is configured with mounting holes on the bottom that correspond with those on the mounting plate 10 one by one, thus it can be fixed onto the mounting plate 10 by the fastening structure; the pressing device base 3 is also configured with two columnar parts with fastening fins in the middle; in the alternative implementation, the parts with fastening fins are configured with a threaded rod in the middle, which can fix the pressing device base 3 and the mounting base 2 onto the windproof cover by another set of threaded holes on the mounting plate 10.

The FPC unit 9 comprises a reinforcement plate unit 29 comprising several reinforcement plates for supporting the FPC cable that is connected with the red-light lamps 12 and the white-light lamps 13 emerged from the surfaces of the reinforcement plates respectively; the reinforcement plate unit 29 matches and connects with the lampshade support frames 11 to jointly support and fix the white-light lamps 13 and the red-light lamps 12.

During assembly, the red-light lamps 12 and the white-light lamps 13 match with the mounting base 2 respectively, and the pressing device base 3 presses on the mounting base 2 to fix and connect the lampshade support frames 11, the red-light lamps 12, the white-light lamps 13 and the mounting base 2 to the inner surface of the windproof cover 1; the lampshades 4 are located in front of the red-light lamps 12 and the white-light lamps 13, i.e., the lampshades are firmly configured in the internal accommodation space of the windproof cover 1 along with the red-light lamps 12, the white-light lamps 13 and the mounting base unit.

According to the windproof cover unit for optical fiber fusion splicer provided by the present invention, the FPC unit comprises a FPC threading structure 14 comprising two parts, among which, the first part comprises a FPC baffle 15, and the second part comprises a FPC winding sleeve 16 and a support frame 17 of the FPC threading-groove; these two parts are connected by the rotational axle 18 of the windproof cover, wherein:
The FPC baffle 15 is configured inside the windproof cover 1 and matches with the side wall of the windproof cover at a certain interval to cover the FPC cable 19.

The support frame 17 of the FPC threading groove comprises a fixed block and a circular block that connect with each other, and the rotational axle 18 of the windproof cover passes through the center hole of the circular block during assembly.

The FPC winding sleeve 16 is located between the FPC baffle 15 and the support frame 17 of the FPC threading groove, and it is enveloped by the fastening of the support frame 17 of the FPC threading groove and the FPC baffle 15; the entire FPC threading structure 14 is configured inside the cover.

According to the windproof cover unit for optical fiber fusion splicer provided by the present invention, the FPC cable of the red-light lamps 12 on the windproof cover passes through the FPC baffle 15 and moves along the FPC baffle and then goes downward at the rotational axle 18 of the windproof cover to connect with the main body of the fusion splicer, and the FPC cable 19 moves around the FPC winding sleeve 16 after going through the FPC baffle 15 to go downward and connect with the main body of the fusion splicer.

According to the windproof cover unit for optical fiber fusion splicer provided by the present invention, the unit further comprises a set screw 23 of the windproof cover; the windproof cover comprises a location hole 20 of the windproof cover near the inner side of the windproof cover, a threaded hole 21 of the windproof cover near the outer side of the windproof cover and on the same axle with the location hole 20 of the windproof cover, and a screw hole 22 of the windproof cover configured perpendicularly to the threaded hole 21 of the windproof cover; the set screw 23 of the windproof cover sticks into the screw hole 22 of the windproof cover and matches with the rotational axle 18 of the windproof cover to fix the rotational axle 18 of the windproof cover to keep it stable and undetached.

The rotational axle 18 of the windproof cover comprises a nut 25, a threaded part 26 in the middle of the rotational axle, a connection part between the nut 25 and the threaded part 26, and a guide part 27 facing the nut and at the other end of the rotational axle 18 of the windproof cover; the rotational axle 18 of the windproof cover is configured at the left and right ends of the optical fiber fusion splicer, and the threaded part 26 of the rotational axle 18 of the windproof cover matches with the threaded part of the windproof cover; the guide part 27 of the rotational axle matches with the location hole on the rotational axle of the windproof cover to guarantee the rotational axles at both ends are on the same line, namely, to guarantee axiality.

The rotational axle 18 of the windproof cover is configured with a step part on the inner side of the nut 25; the size of the step part is designed with reference to the flange bearing and presses the bearing without affecting its rotation; the step part is similar to a circular screw head hole, and such similarity enables the nut part 25 of the rotational axle 18 of the windproof cover to match with the flange bearing 24.

According to the windproof cover unit for optical fiber fusion splicer provided by the present invention, during assembly, the guide part 27 of the rotational axle 18 of the windproof cover passes through the support frame 17 of the FPC threading groove, the FPC baffle 15 and the FPC winding sleeve 16 successively and also sticks into the location hole 20 of the windproof cover. The present invention provides a windproof cover unit for optical fiber fusion splicer, wherein the FPC cable of the red-light lamps on the windproof cover passes through the FPC baffle and moves along the FPC baffle and then goes downward at the rotational axle to connect with the main body of the fusion splicer, and the FPC cable moves around the FPC winding sleeve after going through the FPC baffle to go downward and connect with the main body of the fusion splicer.

According to the windproof cover unit for optical fiber fusion splicer in the present invention, it has the following advantages:
1. The white-light lamps of the optical fiber fusion splicer can be configured inside the windproof cover and the radiation angle of the white-light lamps can be designed according to the opening and closing angle of the windproof cover to simplify the design structure and operation of the white-light lamps as well as the structure of the optical fiber fusion splicer.
2. By utilizing the threaded rotational axle, location hole, set hole and set axle with adjustable tightness designed by the present invention to match with the windproof cover, it enables free adjustments of the tightness of the rotational axle of the windproof cover in the present invention, which guarantees the stability of the rotation of the windproof cover when opening the cover and prevents the windproof cover from moving in the axial direction and also the rotational axle of the windproof cover from coming off, thus guaranteeing the stability and effectiveness of the windproof cover unit in long-term use.
3. By utilizing the FPC threading structure designed in the present invention to match with the windproof cover, it enables the entire FPC threading structure to be configured inside the cover, thus the possibility of damage to the FPC cable becomes much lower as it is not exposed to the outside, and the entire structure is simple, convenient and elaborately designed, so no cover is required for the FPC cable and the appearance is guaranteed without compromising its performance.

### DESCRIPTION OF DRAWINGS

The following is a further detailed description of the present invention with reference to the accompanying drawings, wherein:
Fig. 1: Schematic diagram of the entire assembled windproof cover unit for optical fiber fusion splicer in the present invention;
Fig. 2: Exploded view of the windproof cover unit for optical fiber fusion splicer in the present invention before and after the assembly of the red- and white-light lamps;
Fig. 3: Schematic diagram of the FPC unit and the rotational axle of the windproof cover of the windproof cover unit for optical fiber fusion splicer in the present invention;
Fig. 4: Schematic diagram of the red- and white-light lamps on the FPC unit of the windproof cover unit for optical fiber fusion splicer in the present invention;
Fig. 5: Exploded view of the rotational axle of the windproof cover of the windproof cover unit for optical fiber fusion splicer in the present invention;
Fig. 6: Sectional schematic diagram and partial enlarged schematic diagram of the assembly of the rotational axle of the windproof cover of the windproof cover unit for optical fiber fusion splicer inside the windproof cover in the present invention;
Fig. 7: Schematic diagram of the matching of the rotational axle of the windproof cover and the windproof cover of the windproof cover unit for optical fiber fusion splicer in the present invention;
Fig. 8: Schematic diagram of the matching location of the rotational axle of the windproof cover and the windproof cover of the windproof cover unit for optical fiber fusion splicer in the present invention;
Fig. 9: Schematic diagram of the FPC baffle in the windproof cover of the windproof cover unit for optical fiber fusion splicer in the present invention;
Fig. 10: Schematic diagram of the FPC unit of the windproof cover unit for optical fiber fusion splicer in the present invention.

### DETAILED DESCRIPTION OF EMBODIMENTS

The following is a further detailed description of the present invention with reference to the specific embodiments.

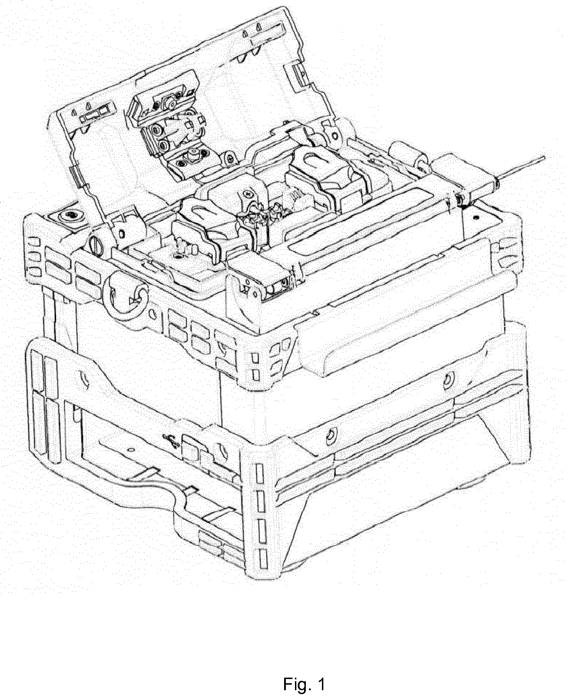

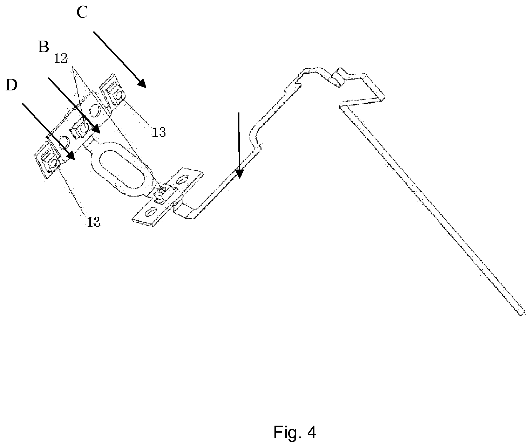

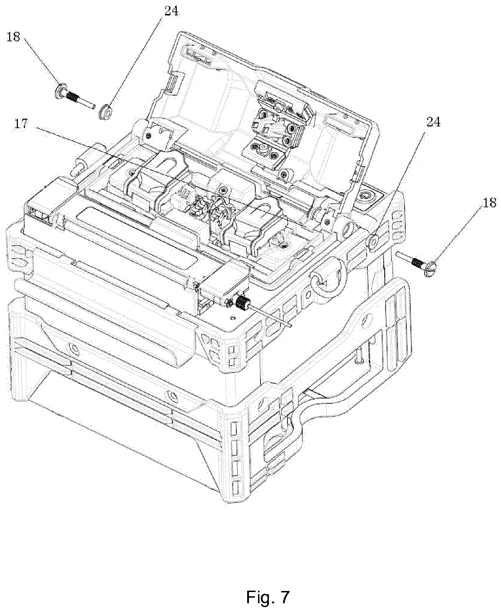

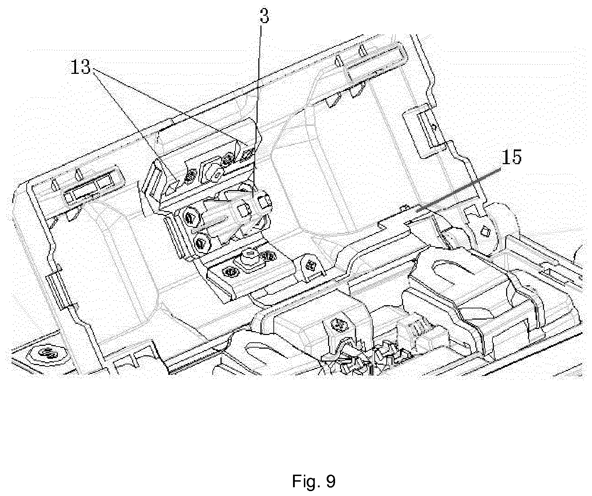

Fig. 1 to Fig. 9 show the schematic diagrams of the windproof cover unit for optical fiber fusion splicer and its multiple parts in the present invention.

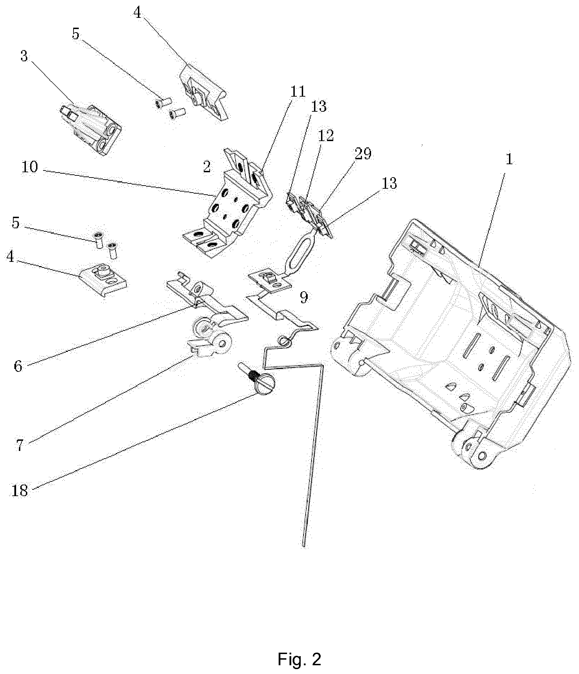

First, with reference to Fig. 1 and Fig. 2, the present invention provides a windproof cover unit for optical fiber fusion splicer comprising a windproof cover 1, a mounting base unit, a FPC unit and a rotational axle 18 of windproof cover, wherein the windproof cover 1 comprising a cover surface and an internal accommodation space, where a white-light lamp unit for the operating illumination of the fusion splicer is configured. The white-light lamp unit comprises two white-light lamps and a FPC cable providing power supply. The FPC cable can be the same FPC cable of the red-light lamps (combined into a single cable with the FPC cable of the red-light lamps) or a FPC cable specifically for the white-light lamps. No limitation is imposed on this issue in the present invention.

The white-light lamp unit is configured on the FPC unit 9, which is configured between the mounting base unit 2 and the internal accommodation space of the windproof cover 1 and is fixed firmly inside the windproof cover 1 by the mounting base unit 2.

The mounting base unit comprises a mounting base 2, two lampshades 4, a pressing device base 3, two pairs of retaining screws 5 for the lampshades, wherein the mounting base 2 comprising a mounting plate 10 in the middle and two lampshade support frames 11 on both sides of the mounting base; the lampshade support frames 11 and the mounting plate 10 are fixedly connected to each other and can be configured as a part formed integrally; the mounting plate 10 is configured with different threaded holes matching with the mounting holes on the inner surface of the windproof cover 1 and those on the lampshades 4 respectively; the mounting plate is configured with lampshade support frames 11 on both sides, and the lampshades 4 are configured with mounting holes, through which the retaining screws 5 for the lampshades connect and fix the lampshade support frames 11 with the lampshades 4; the pressing device base 3 is configured with mounting holes on the bottom that correspond with those on the mounting plate 10 one by one, thus it can be fixed onto the mounting plate 10 by the fastening structure; the pressing device base 3 is also configured with two columnar parts with fastening fins in the middle; in the alternative implementation, the parts with fastening fins are configured with a threaded rod in the middle, which can fix the pressing device base 3 and the mounting base 2 onto the windproof cover by another set of threaded holes on the mounting plate 10.

The FPC unit 9 comprises a reinforcement plate unit 29, two red-light lamps 12, two white-light lamps 13 and a FPC cable supported by the reinforcement plate, wherein the reinforcement plate unit 29 comprises several reinforcement plates for supporting the FPC cable that is connected with the red-light lamps 12 and the white-light lamps 13 emerged from the surfaces of the reinforcement plates respectively; to be specific, the reinforcement plate unit 29 comprises 4 reinforcement plates including A, B, C and D, wherein the reinforcement plates A and B are configured with the red-light lamps 12, i.e., the red-light lamps 12 emerge from the reinforcement plates A and B, and the reinforcement plates C and D on the two sides of the reinforcement plate B are configured with the white-light lamps 13, i.e., the white-light lamps 13 emerge from the reinforcement plates C and D. Besides, the reinforcement plate unit 29 matches and connects with the support frames 11 to firmly fix the red-light lamps, the white-light lamps and the FPC cable.

During assembly, the red-light lamps 12 and the white-light lamps 13 match with the mounting base 2 respectively, and the pressing device base 3 presses on the mounting plate 10 of the mounting base to fix and connect the lampshade support frames 11, the red-light lamps 12, the white-light lamps 13 and the mounting base 2 to the inner surface of the windproof cover 1; the lampshades 4 are located in front of the red-light lamps 12 and the white-light lamps 13, i.e., the lampshades are firmly configured in the internal accommodation space of the windproof cover 1 along with the red-light lamps 12, the white-light lamps 13 and the mounting base unit.

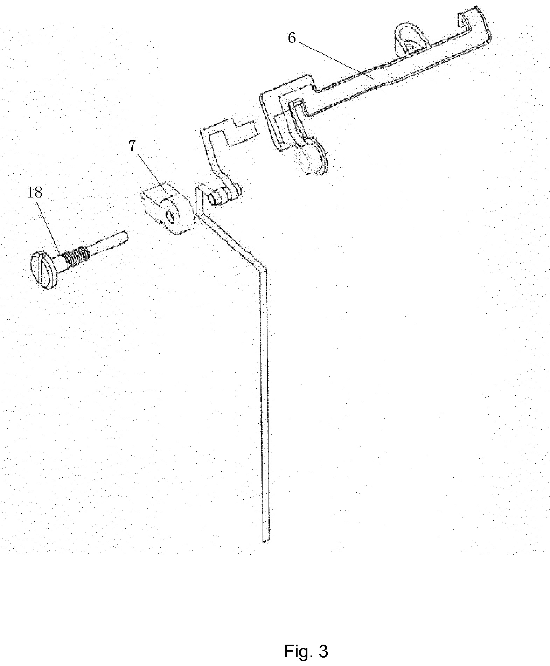

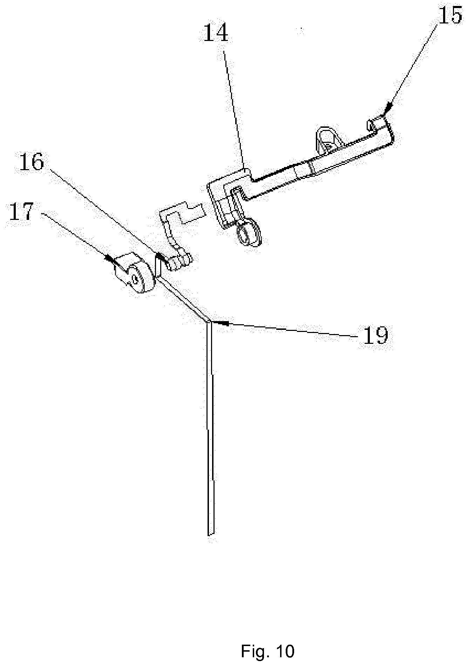

Next, with reference to Fig. 3, Fig. 4 and Fig. 10, according to the windproof cover unit for optical fiber fusion splicer provided by the present invention, the FPC unit further comprises a FPC threading structure 14 comprising two parts, among which, the first part comprises a FPC baffle 15, and the second part comprises a FPC winding sleeve 16 and a support frame 17 of the FPC threading groove; these two parts are connected by the rotational axle 18 of the windproof cover, wherein:
The FPC baffle 15 is configured inside the windproof cover 1 and matches with the side wall of the windproof cover at a certain interval to cover the FPC cable 19.

The support frame of the FPC threading groove 17 comprises a fixed block and a circular block that connect with each other, and the rotational axle 18 of the windproof cover passes through the center hole of the circular block during assembly.

The FPC winding sleeve 16 is located between the FPC baffle 15 and the support frame 17 of the FPC threading groove, and it is enveloped by the fastening of the support frame 17 of the FPC threading groove and the FPC baffle 15; the entire FPC threading structure 14 is configured inside the cover.

According to the windproof cover unit for optical fiber fusion splicer provided by the present invention, the FPC cable of the red-light lamps 12 on the windproof cover passes through the FPC baffle 15 and moves along the FPC baffle and then goes downward at the rotational axle 18 of the windproof cover to connect with the main body of the fusion splicer, and the FPC cable 19 moves around the FPC winding sleeve 16 after going through the FPC baffle 15 to go downward and connect with the main body of the fusion splicer.

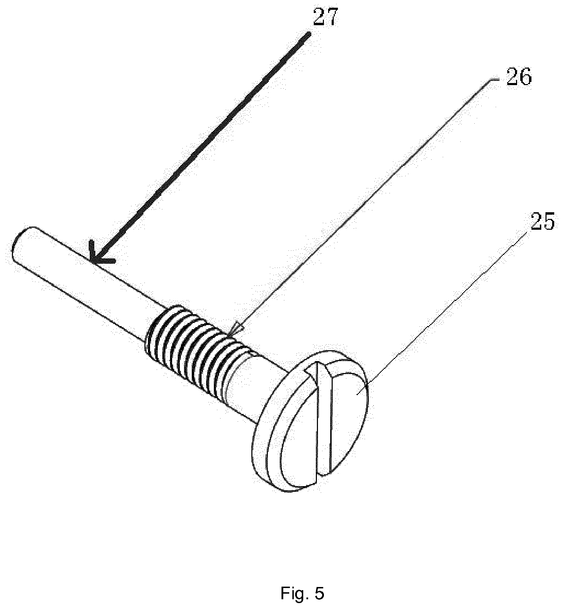

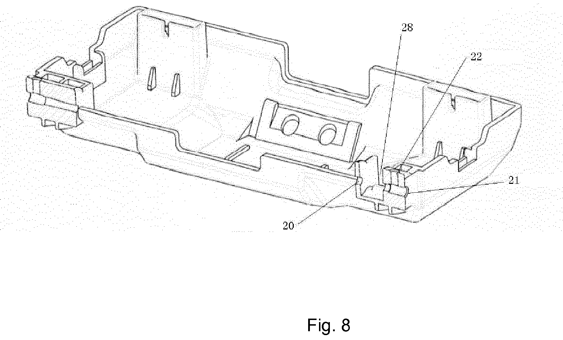

Now with reference to Fig. 5 to Fig. 9, and in particular to Fig. 5 and Fig. 8, according to the windproof cover unit for optical fiber fusion splicer provided by the present invention, the unit further comprises a set screw 23 of the windproof cover; the windproof cover comprises a location hole 20 of the windproof cover near the inner side of the windproof cover, a threaded hole 21 of the windproof cover near the outer side of the windproof cover and on the same axle with the location hole 20 of the windproof cover, and a screw hole 22 of the windproof cover configured perpendicularly to the threaded hole 21 of the windproof cover; the set screw 23 of the windproof cover sticks into the screw hole 22 of the windproof cover and matches with the rotational axle 18 of the windproof cover to fix the rotational axle 18 of the windproof cover to keep it stable and undetached.

With reference to Fig. 5, the rotational axle 18 of the windproof cover comprises a nut 25, a threaded part 26 in the middle of the rotational axle, a connection part between the nut 25 and the threaded part 26, and a guide part 27 facing the nut and at the other end of the rotational axle 18 of the windproof cover; the rotational axle 18 of the windproof cover is configured at the left and right ends of the optical fiber fusion splicer, and the threaded part 26 of the rotational axle 18 of the windproof cover matches with the threaded part of the windproof cover; the guide part 27 of the rotational axle matches with the location hole on the rotational axle of the windproof cover to guarantee the rotational axles at both ends are on the same line, namely, to guarantee axiality.

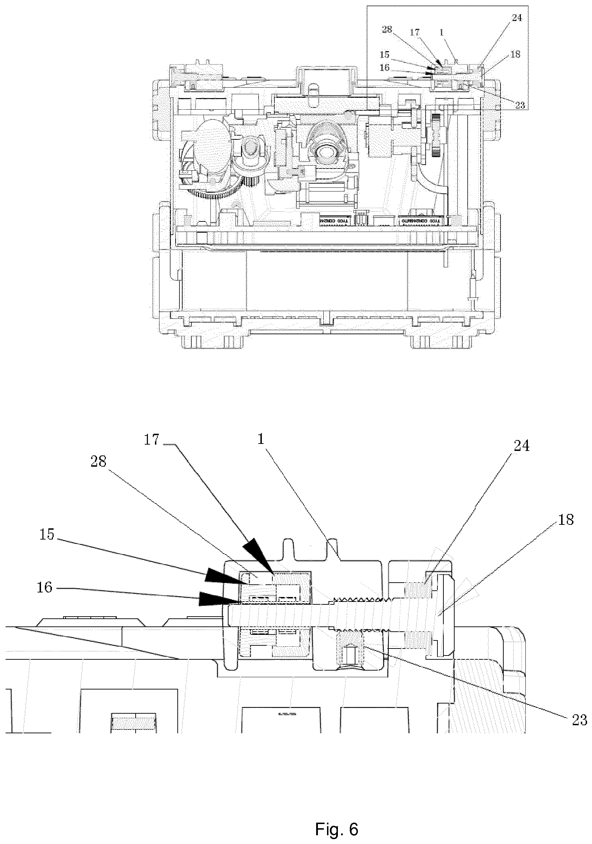

With reference to the schematic diagram and the enlarged view in Fig. 6, the rotational axle 18 of the windproof cover is configured with a step part on the inner side of the nut 25; the size of the step part is designed with reference to the flange bearing and presses the bearing without affecting its rotation; the step part is similar to a circular screw head hole, and such similarity enables the nut part 25 of the rotational axle 18 of the windproof cover to match with the flange bearing 24.

According to the windproof cover unit for optical fiber fusion splicer provided by the present invention, during assembly, the guide part 27 of the rotational axle 18 of the windproof cover passes through the support frame 17 of the FPC threading groove, the FPC baffle 15 and the FPC winding sleeve 16 successively and also sticks into the location hole 20 of the windproof cover. The present invention provides a windproof cover unit for optical fiber fusion splicer, wherein the FPC cable of the red-light lamps on the windproof cover passes through the FPC baffle and moves along the FPC baffle and then goes downward at the rotational axle to connect with the main body of the fusion splicer, and the FPC cable moves around the FPC winding sleeve after going through the FPC baffle to go downward and connect with the main body of the fusion splicer.

According to the windproof cover unit for optical fiber fusion splicer in the present invention, it has the following advantages:
1. The white-light lamps of the optical fiber fusion splicer can be configured inside the windproof cover and the radiation angle of the white-light lamps can be designed according to the opening and closing angle of the windproof cover to simplify the design structure and operation of the white-light lamps as well as the structure of the optical fiber fusion splicer.
2. By utilizing the threaded rotational axle, location hole, set hole and set axle with adjustable tightness designed by the present invention to match with the windproof cover, it enables free adjustment of the tightness of the rotational axle of the windproof cover in the present invention, which guarantees the stability of the rotation of the windproof cover when opening the cover and prevents the windproof cover from moving in the axial direction and also the rotational axle of the windproof cover from coming off, thus guaranteeing the stability and effectiveness of the windproof cover unit in long-term use.
3. By utilizing the FPC threading structure designed in the present invention to match with the windproof cover, it enables the entire FPC threading structure to be configured inside the cover, thus the possibility of damage to the FPC cable becomes much lower as it is not exposed to the outside, and the entire structure is simple, convenient and elaborately designed, so no cover is required for the FPC cable and the appearance is guaranteed without compromising its performance.

Though the embodiments in the present invention have been presented and described above, it is understandable that the above embodiments are merely examples, which cannot be considered as limitations to the present invention; a person of ordinary skill in the art can change, modify, replace or transform the above embodiments within the scope of the present invention. The protection scope of the present invention shall be defined by the claims.

## Claims

1. A windproof cover unit for an optical fiber fusion splicer, said windproof cover unit comprising a windproof cover (1), a mounting base unit (2), a flexible printed circuit unit, FPC unit (9) and a rotational axle (18) of the windproof cover (1), wherein the windproof cover (1) comprises a protruding cover surface and an internal accommodation space, where a white-light lamp unit (13) comprising two white lamps (13) and an FPC cable (19) providing power supply for the operating illumination of the fusion splicer is configured; and wherein the white-light lamp unit (13) is configured on the FPC unit (9), which is configured between the mounting base unit (2) and the internal accommodation space of the windproof cover (1) and is fixed firmly inside the windproof cover (1) by the mounting base unit (2); **characterized in that** said mounting base unit comprises a mounting base (2), two lampshades (4), a pressing device base (3), and two pairs of retaining screws (5) for the lampshades, wherein the mounting base (2) comprises a mounting plate (10) in the middle, on which different threaded holes matching with the mounting holes on the inner surface of the windproof cover (1) and those on the lampshades (4) respectively are configured; the mounting plate (10) is configured with lampshade support frames (11) on both sides, and the lampshades (4) are configured with mounting holes, through which the retaining screws (5) for the lampshades connect and fix the lampshade support frames (11) with the lampshades (4); the pressing device base (3) is configured with mounting holes on the bottom that correspond with those on the mounting plate (10) one by one, thus the pressing device base (3) can be fixed onto the mounting plate (10) by the fastening structure; the FPC unit (9) comprises a reinforcement plate unit (29) comprising several reinforcement plates for supporting the FPC cable (19) that is connected with red-light lamps (12) and the white-light lamps (13) emerged from the surfaces of the reinforcement plates respectively; the reinforcement plate unit (29) matches and connects with the lampshade support frames (11) to jointly support and fix the white-light lamps (13) and the red-light lamps (12).

2. The windproof cover unit according to claim 1, wherein the mounting base unit and the FPC unit (9) are fixed in the following manner: the red-light lamps (12) and the white-light lamps (13) match with the mounting base (2) respectively, and the pressing device base (3) presses on the mounting base (2) to fix and connect the lampshade support frames (11), the red-light lamps (12), the white-light lamps (13) and the mounting base (2) to the inner surface of the windproof cover (1); the lampshades (4) are located in front of the red-light lamps (12) and the white-light lamps (13), wherein the lampshades are firmly configured in the internal accommodation space of the windproof cover 1 along with the red-light lamps (12), the white-light lamps (13) and the mounting base unit.

3. The windproof cover unit according to claim 1, wherein the FPC unit (9) comprises an FPC threading structure (14) comprising two parts (15, 26, 27), among which a first part comprises an FPC baffle (15), and a second part comprises an FPC winding sleeve (16) and a support frame (17) of the FPC threading groove; the two parts (15, 16, 17) are connected by the rotational axle (18) of the windproof cover, wherein:
the FPC baffle (15) is configured inside the windproof cover (1) and matches with the side wall of the windproof cover (1) at a certain interval to cover the FPC cable (19);
the support frame (17) of the FPC threading groove comprises a fixed block and a circular block that connect with each other, and the rotational axle (18) of the windproof cover passes through the center hole of the circular block during assembly;
the FPC winding sleeve (16) is located between the FPC baffle (15) and the support frame (17) of the FPC threading groove, and it is enveloped by the fastening of the support frame (17) of the FPC threading groove and the FPC baffle (15); the entire FPC threading structure (14) is configured inside the cover.

4. The windproof cover unit according to claim 3, wherein the FPC cable (19) of the red-light lamps (12) or the white-light lamps (13) on the windproof cover (1) passes through the FPC baffle (15) and moves along the FPC baffle (15) and then goes downward at the rotational axle (18) of the windproof cover to connect with the main body of the fusion splicer, and the FPC cable (19) moves around the FPC winding sleeve (16) after going through the FPC baffle (15) to go downward and connect with the main body of the fusion splicer.

5. The windproof cover unit according to claim 4, which further comprises a set screw (23) of the windproof cover (1); the windproof cover (1) comprises a location hole (20) of the windproof cover (1) near the inner side of the windproof cover (1), a threaded hole (21) of the windproof cover (1) near the outer side of the windproof cover (1) and on the same axle with the location hole (20) of the windproof cover (1), and a screw hole (22) of the windproof cover (1) placed perpendicularly to the threaded hole (21) of the windproof cover (1); the set screw (23) of the windproof cover (1) sticks into the screw hole (22) of the windproof cover (1) and matches with the rotational axle (18) of the windproof cover (1) to fix the rotational axle (18) of the windproof cover (1) to keep it stable and undetached;
the rotational axle (18) of the windproof cover (1) comprises a nut (25), a threaded part (26) in the middle of the rotational axle (18), a connection part between the nut (25) and the threaded part (26), and a guide part (27) facing the nut and at the other end of the rotational axle (18) of the windproof cover (1); the rotational axle (18) of the windproof cover (1) is configured at the left and right ends of the optical fiber fusion splicer, and the threaded part (26) of the rotational axle (18) of the windproof cover (1) matches with the threaded part of the windproof cover (1); the guide part (27) of the rotational axle (18) matches with the location hole on the rotational axle (18) of the windproof cover (1) to guarantee the rotational axles at both ends are on the same line, namely, to guarantee axiality.

6. The windproof cover unit according to claim 5, wherein the rotational axle (18) of the windproof cover (1) is configured with a step part on the inner side of the nut (25); the size of the step part is designed with reference to the flange bearing and presses the bearing without affecting its rotation; the step part is similar to a circular screw head hole, and such similarity enables the nut part (25) of the rotational axle (18) of the windproof cover (1) to match with the flange bearing (24).

7. The windproof cover unit according to claim 6, during assembly, the guide part (27) of the rotational axle (18) of the windproof cover (1) passes through the support frame (17) of the FPC threading groove, the FPC baffle (15) and the FPC winding sleeve (16) successively and also sticks into the location hole (20) of the windproof cover (1).

8. The windproof cover unit according to claim 7, wherein the FPC cable (19) of the red-light lamps (12) on the windproof cover (1) passes through the FPC baffle (15) and moves along the FPC baffle (15) and then goes downward at the rotational axle to connect with the main body of the fusion splicer, and the FPC cable (19) moves around the FPC winding sleeve (16) after going through the FPC baffle (15) to go downward and connect with the main body of the fusion splicer.

## Patentansprüche

1. Winddichte Abdeckungseinheit für einen Lichtleitfaser-Fusionsspleißer, wobei die winddichte Abdeckungseinheit eine winddichte Abdeckung (1), eine Befestigungssockeleinheit (2), eine flexible Leiterplatteneinheit, FPC-Einheit (9), und eine Drehachse (18) der winddichten Abdeckung (1) umfasst, wobei die winddichte Abdeckung (1) eine hervorstehende Abdeckfläche und einen inneren Aufnahmeraum umfasst, in dem eine Weißlichtlampeneinheit (13), die zwei weiße Lampen (13) umfasst, und ein FPC-Kabel (19), das eine Stromversorgung für die Betriebsbeleuchtung des Fusionsspleißers bereitstellt, ausgebildet sind; und wobei die Weißlichtlampeneinheit (13) auf der FPC-Einheit (9) ausgebildet ist, die zwischen der Befestigungssockeleinheit (2) und dem inneren Aufnahmeraum der winddichten Abdeckung (1) ausgebildet ist und durch die Befestigungssockeleinheit (2) fest in der winddichten Abdeckung (1) fixiert ist;
**dadurch gekennzeichnet, dass**
die Befestigungssockeleinheit einen Befestigungssockel (2), zwei Lampenschirme (4), einen Pressvorrichtungssockel (3) und zwei Paare von Halteschrauben (5) für die Lampenschirme umfasst, wobei der Befestigungssockel (2) eine Befestigungsplatte (10) in der Mitte umfasst, an der verschiedene Gewindebohrungen ausgebildet sind, die jeweils mit den Befestigungslöchern an der Innenfläche der winddichten Abdeckung (1) und denen an den Lampenschirmen (4) zusammenpassen; die Befestigungsplatte (10) beidseitig mit Lampenschirmhalterahmen (11) ausgebildet ist und die Lampenschirme (4) mit Befestigungslöchern ausgebildet sind, durch die hindurch die Halteschrauben (5) für die Lampenschirme die Lampenschirmhalterahmen (11) mit den Lampenschirmen (4) verbinden und fixieren; der Pressvorrichtungssockel (3) an der Unterseite mit Befestigungslöchern ausgebildet ist, die mit denen der Befestigungsplatte (10) eins zu eins übereinstimmen, sodass der Pressvorrichtungssockel (3) mittels der Befestigungsstruktur an der Befestigungsplatte (10) fixiert werden kann; die FPC-Einheit (9) eine Verstärkungsplatteneinheit (29) umfasst, die mehrere Verstärkungsplatten zum Halten des FPC-Kabels (19) umfasst, das jeweils mit Rotlichtlampen (12) und den aus den Oberflächen der Verstärkungsplatten hervortretenden Weißlichtlampen (13) verbunden ist; die Verstärkungsplatteneinheit (29) mit den Lampenschirmhalterahmen (11) zusammenpasst und damit verbunden werden kann, um die Weißlichtlampen (13) und die Rotlichtlampen (12) gemeinsam zu halten und zu fixieren.

2. Winddichte Abdeckungseinheit nach Anspruch 1, wobei die Befestigungssockeleinheit und die FPC-Einheit (9) wie folgt fixiert werden: die Rotlichtlampen (12) und die Weißlichtlampen (13) passen jeweils mit dem Befestigungssockel (2) zusammen, und der Pressvorrichtungssockel (3) wirkt Druck auf den Befestigungssockel (2) aus, um die Lampenschirmhalterahmen (11), die Rotlichtlampen (12), die Weißlichtlampen (13) und den Befestigungssockel (2) an der Innenfläche der winddichten Abdeckung (1) zu fixieren und damit zu verbinden; die Lampenschirme (4) sind vor den Rotlichtlampen (12) und den Weißlichtlampen (13) angeordnet, wobei die Lampenschirme zusammen mit den Rotlichtlampen (12), den Weißlichtlampen (13) und der Befestigungssockeleinheit fest in dem inneren Aufnahmeraum der winddichten Abdeckung (1) angeordnet sind.

3. Winddichte Abdeckungseinheit nach Anspruch 1, wobei die FPC-Einheit (9) eine FPC-Einziehstruktur (14) umfasst, die zwei Teile (15, 26, 27) umfasst, von denen ein erster Teil eine FPC-Umlenkung (15) umfasst und ein zweiter Teil eine FPC-Wickelhülse (16) und einen Halterahmen (17) der FPC-Einziehnut umfasst; wobei die zwei Teile (15, 16, 27) durch die Drehachse (18) der winddichten Abdeckung verbunden sind, wobei:
die FPC-Umlenkung (15) im Inneren der winddichten Abdeckung (1) ausgebildet ist und mit der Seitenwand der winddichten Abdeckung (1) in einem bestimmten Abstand übereinstimmt, um das FPC-Kabel (19) abzudecken;
der Halterahmen (17) der FPC-Einziehnut einen festen Block und einem kreisförmigen Block umfasst, die miteinander verbunden sind, und wobei die Drehachse (18) der winddichten Abdeckung während der Montage durch das Mittelloch des kreisförmigen Blocks hindurchgeht;
die FPC-Wickelhülse (16) zwischen der FPC-Umlenkung (15) und dem Halterahmen (17) der FPC-Einziehnut angeordnet ist und durch die Befestigung des Halterahmens (17) der FPC-Einziehnut und der FPC-Umlenkung (15) umschlossen wird; wobei die gesamte FPC-Einziehstruktur (14) im Inneren der Abdeckung ausgebildet ist.

4. Winddichte Abdeckungseinheit nach Anspruch 3, wobei das FPC-Kabel (19) der Rotlichtlampen (12) oder der Weißlichtlampen (13) an der winddichten Abdeckung (1) durch die FPC-Umlenkung (15) hindurchgeht und sich entlang der FPC-Umlenkung (15) bewegt und anschließend an der Drehachse (18) der winddichten Abdeckung nach unten verläuft, um eine Verbindung mit dem Hauptkörper des Fusionsspleißers herzustellen, und wobei sich das FPC-Kabel (19), nachdem es durch die FPC-Umlenkung (15) hindurchgeht, um nach unten zu verlaufen und eine Verbindung mit dem Hauptkörper des Fusionsspleißers herzustellen, um die FPC-Wickelhülse (16) herum bewegt.

5. Winddichte Abdeckungseinheit nach Anspruch 4, die ferner eine Stellschraube (23) der winddichten Abdeckung (1) umfasst; wobei die winddichte Abdeckung (1) ein Aufnahmeloch (20) der winddichten Abdeckung (1) nahe der Innenseite der winddichten Abdeckung (1), eine Gewindebohrung (21) der winddichten Abdeckung (1) nahe der Außenseite der winddichten Abdeckung (1) und auf derselben Achse wie das Aufnahmeloch (20) der winddichten Abdeckung (1) und ein Schraubloch (22) der winddichten Abdeckung (1), das senkrecht zur Gewindebohrung (21) der winddichten Abdeckung (1) angeordnet ist, umfasst; wobei die Stellschraube (23) der winddichten Abdeckung (1) in das Schraubloch (22) der winddichten Abdeckung (1) hineinragt und mit der Drehachse (18) der winddichten Abdeckung (1) übereinstimmt, um die Drehachse (18) der winddichten Abdeckung (1) so zu fixieren, dass sie stabil und freistehend bleibt;
wobei die Drehachse (18) der winddichten Abdeckung (1) eine Mutter (25), einen Gewindeteil (26) in der Mitte der Drehachse (18), einen Verbindungsteil zwischen der Mutter (25) und dem Gewindeteil (26) und einen Führungsteil (27), der der Mutter zugewandt ist und sich am anderen Ende der Drehachse (18) der winddichten Abdeckung (1) befindet, umfasst; wobei die Drehachse (18) der winddichten Abdeckung (1) am linken und rechten Ende des Lichtleitfaser-Fusionsspleißers ausgebildet ist und der Gewindeteil (26) der Drehachse (18) der winddichten Abdeckung (1) mit dem Gewindeteil der winddichten Abdeckung (1) zusammenpasst; wobei der Führungsteil (27) der Drehachse (18) mit dem Aufnahmeloch an der Drehachse (18) der winddichten Abdeckung (1) zusammenpasst, um zu gewährleisten, dass sich die Drehachsen an beiden Enden auf derselben Linie befinden, und zwar, um eine Axialität zu gewährleisten.

6. Winddichte Abdeckungseinheit nach Anspruch 5, wobei die Drehachse (18) der winddichten Abdeckung (1) mit einem Stufenteil auf der Innenseite der Mutter (25) ausgebildet ist; wobei die Größe des Stufenteils im Hinblick auf das Flanschlager ausgestaltet ist und das Lager eindrückt, ohne dessen Drehung zu beeinträchtigen; wobei der Stufenteil einem kreisförmigen Schraubkopfloch ähnlich ist und eine solche Ähnlichkeit es ermöglicht, dass der Mutterteil (25) der Drehachse (18) der winddichten Abdeckung (1) mit dem Flanschlager (24) übereinstimmt.

7. Winddichte Abdeckungseinheit nach Anspruch 6, wobei der Führungsteil (27) der Drehachse (18) der winddichten Abdeckung (1), während der Montage, nacheinander durch den Halterahmen (17) der FPC-Einziehnut, die FPC-Umlenkung (15) und die FPC-Wickelhülse (16) hindurchgeht und zudem in das Aufnahmeloch (20) der winddichten Abdeckung (1) hineinragt.

8. Winddichte Abdeckungseinheit nach Anspruch 7, wobei das FPC-Kabel (19) der Rotlichtlampen (12) an der winddichten Abdeckung (1) durch die FPC-Umlenkung (15) hindurchgeht und sich entlang der FPC-Umlenkung (15) bewegt und anschließend an der Drehachse nach unten verläuft, um eine Verbindung mit dem Hauptkörper des Fusionsspleißers herzustellen, und wobei sich das FPC-Kabel (19) um die FPC-Wickelhülse (16) herum bewegt, nachdem es durch die FPC-Umlenkung (15) hindurchgeht, um nach unten zu verlaufen und eine Verbindung mit dem Hauptkörper des Fusionsspleißers herzustellen.

## Revendications

1. Unité de couvercle coupe-vent pour un épisseur par fusion de fibre optique, ladite unité de couvercle coupe-vent comprenant un couvercle coupe-vent (1), une unité de base de montage (2), une unité de circuit imprimé souple FPC (9) et un axe de rotation (18) du couvercle coupe-vent (1), dans laquelle le couvercle coupe-vent (1) comprend une surface de couvercle en saillie et un espace d'accueil intérieur, où sont configurés une unité de lampe à lumière blanche (13) comprenant deux lampes blanches (13) et un câble FPC (19) fournissant une alimentation électrique pour l'éclairage fonctionnel de l'épisseur à fusion ; et dans laquelle l'unité de lampe à lumière blanche (13) est configurée sur l'unité FPC (9), laquelle est configurée entre l'unité de base de montage (2) et l'espace d'accueil intérieur du couvercle coupe-vent (1) et fixée solidement à l'intérieur du couvercle coupe-vent (1) par l'unité de base de montage (2) ;
**caractérisée en ce que**
ladite unité de base de montage comprend une base de montage (2), deux abat-jours (4), une base de dispositif de pression (3), et deux paires de vis de maintien (5) pour les abat-jours, la base de montage (2) comprenant une plaque de montage (10) au centre, sur laquelle sont respectivement configurés différents alésages filetés correspondant aux alésages de montage dans la surface intérieure du couvercle coupe-vent (1) et à ceux dans les abat-jours (4) ; la plaque de montage (10) est configurée avec des cadres de support d'abat-jour (11) sur les deux côtés, et les abat-jours (4) sont configurés avec des alésages de montage, à travers lesquels les vis de maintien (5) pour les abat-jours relient et fixent les cadres de support d'abat-jour (11) aux abat-jours (4) ; la base de dispositif de pression (3) est configurée avec des alésages de montage dans le fond, correspondant un à un à ceux dans la plaque de montage (10), la base de dispositif de pression (3) pouvant ainsi être fixée sur la plaque de montage (10) par la structure de fixation ; l'unité FPC (9) comprend une unité de plaque de renforcement (29) comprenant plusieurs plaques de renforcement destinées à supporter le câble FPC (19) relié à des lampes à lumière rouge (12) et aux lampes à lumière blanche (13) émergeant des surfaces des plaques de renforcement respectivement ; l'unité de plaque de renforcement (29) correspond aux cadres de support d'abat-jour (11) tout en étant reliée à ceux-ci, pour supporter conjointement et fixer les lampes à lumière blanche (13) et les lampes à lumière rouge (12).

2. Unité de couvercle coupe-vent selon la revendication 1, dans laquelle l'unité de base de montage et l'unité FPC (9) sont fixées de la manière suivante : les lampes à lumière rouge (12) et les lampes à lumière blanche (13) correspondent à la base de montage (2) respectivement, et la base de dispositif de pression (3) appuie sur la base de montage (2) pour fixer et relier les cadres de support d'abat-jour (11), les lampes à lumière rouge (12), les lampes à lumière blanche (13) et la base de montage (2) à la surface intérieure du couvercle coupe-vent (1) ; les abat-jours (4) se trouvent en face des lampes à lumière rouge (12) et des lampes à lumière blanche (13), les abat-jours étant configurés solidement dans l'espace d'accueil intérieur du couvercle coupe-vent (1) ensemble avec les lampes à lumière rouge (12), les lampes à lumière blanche (13) et l'unité de base de montage.

3. Unité de couvercle coupe-vent selon la revendication 1, dans laquelle l'unité FPC (9) comprend une structure de filetage FPC (14) comprenant deux parties (15, 26, 27), parmi lesquelles une première partie comprend un déflecteur FPC (15), et une deuxième partie comprend un manchon d'enroulement FPC (16) et un cadre de support (17) de la rainure de filetage FPC ; dans laquelle les deux parties (15, 26, 27) sont reliées par l'axe de rotation (18) du couvercle coupe-vent, dans laquelle :
le déflecteur FPC (15) est configuré à l'intérieur du couvercle coupe-vent (1) et correspond à la paroi latérale du couvercle coupe-vent (1) à un certain intervalle pour recouvrir le câble FPC (19) ;
le cadre de support (17) de la rainure de filetage FPC comprend un bloc fixe et un bloc circulaire reliés l'un à l'autre, et l'axe de rotation (18) du couvercle coupe-vent travers l'alésage central du bloc circulaire pendant l'assemblage ;
le manchon d'enroulement FPC (16) se trouve entre le déflecteur FPC (15) et le cadre de support (17) de la rainure de filetage FPC, tout en étant enveloppé par la fixation du cadre de support (17) de la rainure de filetage FPC et du déflecteur FPC (15) ; l'ensemble de la structure de filetage FPC (14) est configuré à l'intérieur du couvercle.

4. Unité de couvercle coupe-vent selon la revendication 3, dans laquelle le câble FPC (19) des lampes à lumière rouge (12) ou des lampes à lumière blanche (13) sur le couvercle coupe-vent (1) traverse le déflecteur FPC (15) et se déplace le long du déflecteur FPC (15), puis descend au niveau de l'axe de rotation (18) du couvercle coupe-vent pour se raccorder au corps principal de l'épisseur par fusion, et le câble FPC (19) se déplace autour du manchon d'enroulement FPC (16) après avoir traversé le déflecteur FPC (15) pour descendre vers le corps principal de l'épisseur par fusion et se raccorder à celui-ci.

5. Unité de couvercle coupe-vent selon la revendication 4, comprenant en outre une vis de réglage (23) du couvercle coupe-vent (1) ; le couvercle coupe-vent (1) comprend un alésage de positionnement du couvercle coupe-vent (1) à proximité du côté intérieur du couvercle coupe-vent (1), un alésage fileté (21) du couvercle coupe-vent (1) à proximité du côté extérieur du couvercle coupe-vent (1) et sur le même axe que l'alésage de positionnement (20) du couvercle coupe-vent (1), et un alésage de vis (22) du couvercle coupe-vent (1) placé perpendiculairement à l'alésage fileté (21) du couvercle coupe-vent (1); la vis de réglage (23) du couvercle coupe-vent (1) s'introduit dans l'alésage de vis (22) du couvercle coupe-vent (1) et correspond à l'axe de rotation (18) du couvercle coupe-vent (1) pour fixer l'axe de rotation (18) du couvercle coupe-vent (1) afin de le maintenir stable et attaché ;
l'axe de rotation (18) du couvercle coupe-vent (1) comprend un écrou (25), une partie filetée (26) au centre de l'axe de rotation (18), une partie de connexion entre l'écrou (25) et la partie filetée (26), et une partie de guidage (27) tournée vers l'écrou, à l'autre extrémité de l'axe de rotation (18) du couvercle coupe-vent (1) ; l'axe de rotation (18) du couvercle coupe-vent (1) est configuré aux extrémités gauche et droite de l'épisseur par fusion de fibre optique, et la partie filetée (26) de l'axe de rotation (18) du couvercle coupe-vent (1) correspond à la partie filetée du couvercle coupe-vent (1) ; la partie de guidage (27) de l'axe de rotation (18) correspond à l'alésage de positionnement dans l'axe de rotation (18) du couvercle coupe-vent (1) pour garantir l'alignement des axes de rotation aux deux extrémités, notamment pour garantir l'axialité.

6. Unité de couvercle coupe-vent selon la revendication 5, dans laquelle l'axe de rotation (18) du couvercle coupe-vent (1) est configuré avec une partie de gradin sur le côté intérieur de l'écrou (25) ; la taille de la partie de gradin est conçue par rapport au palier de bride et appuie sur le palier sans affecter sa rotation ; la partie de gradin est similaire à un alésage de tête de vis circulaire, et cette similarité permet à la partir d'écrou (25) de l'axe de rotation (18) du couvercle coupe-vent (1) de correspondre au palier de bride (24).

7. Unité de couvercle coupe-vent selon la revendication 6, dans laquelle, pendant l'assemblage, la partie de guidage (27) de l'axe de rotation (18) du couvercle coupe-vent (1) traverse le cadre de support (17) de la rainure de filetage FPC, le déflecteur FPC (15) et le manchon d'enroulement FPC (16) successivement et s'introduit également dans l'alésage de positionnement (20) du couvercle coupe-vent (1).

8. Unité de couvercle coupe-vent selon la revendication 7, dans laquelle le câble FPC (19) des lampes à lumière rouge (12) sur le couvercle coupe-vent (1) traverse le déflecteur FPC (15) et se déplace le long du déflecteur FPC (15), puis descend au niveau de l'axe de rotation pour se raccorder au corps principal de l'épisseur par fusion, et le câble FPC (19) se déplace autour du manchon d'enroulement FPC (16) après avoir traversé le déflecteur FPC (15) pour descendre vers le corps principal de l'épisseur par fusion et se raccorder à celui-ci.
